# FASCICULE DE BREVET EUROPEEN

(11) **EP 4 022 493 B1**
(45) Date de publication et mention de la délivrance du brevet: **22.07.2026**
(21) Numéro de dépôt: 20747002.2
(22) Date de dépôt: 04.08.2020
(51) Int. Cl.: G06V 40/12

(54) **SYSTÈME ET PROCÉDÉ POUR ACQUÉRIR DES DONNÉES BIOMÉTRIQUES**
SYSTEM UND VERFAHREN ZUR ERFASSUNG VON BIOMETRISCHEN DATEN
SYSTEM AND METHOD FOR BIOMETRIC DATA ACQUISITION

(30) Priorité: 28.08.2019 FR 1909447
(43) Date de publication de la demande: 06.07.2022
(73) Titulaire: Imprimerie Nationale, 75116 Paris (FR)
(72) Inventeur: MALBOROUGT, Jean-Noël, 78140 VELIZY-VILLACOUBLAY (FR)
(74) Mandataire: Brun, Philippe Alexandre Georges
(86) Numéro de dépôt international: PCT/EP2020/071859
(87) Numéro de publication internationale: WO 2021/037495

(56) Documents cités:
- US-A1- 2018 189 469
- US-B1- 6 182 076

## Description

La présente invention concerne un système et un procédé permettant d'acquérir des données biométriques en utilisant un système web.

Les données biométriques sont de plus en plus souvent utilisées dans différents domaines, pour le contrôle d'accès, pour élaborer un document d'identité ou pour d'autres applications.

L'enrôlement biométrique d'un sujet depuis un site web via un navigateur implique l'utilisation de périphériques, tels que des capteurs d'empreinte, une caméra industrielle. Le pilotage de ces périphériques est complexe du fait d'une problématique de sécurité.

Différents systèmes permettant cette acquisition sont connus de l'art antérieur. Le document US 2018/189469 A1(NAM DOYEON [KR]) 5 juillet 2018 divulgue un système d'acquisition de données biométriques basé sur une architecture client-serveur, disposant d'un middleware.

Les technologies de type client « riche », i.e. application qui se lance dans le navigateur et qui s'exécute sur le poste de travail, sont actuellement les solutions connues de l'art antérieur pour communiquer avec des périphériques branchés en USB et procéder à une acquisition biométrique. Les clients riches sont des éléments graphiques chargés dans le navigateur. Ils sont instanciés avec les éléments graphiques dans le navigateur et téléchargés au moment de l'exécution. Ceci entraîne des failles dans la sécurité. Un tel type de système est décrit dans la demande de brevet US 2001/000045.

L'idée de la présente invention est d'offrir un système et un procédé permettant d'acquérir l'image et les « templates » biométriques, tels qu'une empreinte digitale, un visage, une signature numérique, depuis un système « web ».

Le procédé et le système selon l'invention mettent en œuvre un « middleware », service autonome fonctionnant sans navigateur, fournissant des interfaces logicielles et non les éléments graphiques, en fonctionnement normal.

La description qui suit utilise le mot « middleware » pour désigner un logiciel certifié au niveau de la sécurité et installé sur un ordinateur permettant notamment de faire communiquer plusieurs applications ou dispositifs entre eux.

L'invention concerne un système pour acquérir des données biométriques propres à un individu caractérisé en ce qu'il comporte au moins les éléments suivants :

Un serveur hébergeant une ou plusieurs pages web,

Un ordinateur avec un navigateur permettant d'accéder auxdites pages web,

Un ou plusieurs équipements périphériques configurés pour acquérir une ou plusieurs données biométriques, lesdits équipements étant reliés à l'ordinateur via une liaison,

Un middleware installé sur ledit ordinateur, ledit middleware comprenant un module d'analyse des données, un module d'exploitation des données, un module de chiffrement des données, une mémoire vive, un module de communication avec lesdits périphériques,

Ledit middleware est configuré pour :
Contrôler la qualité des données biométriques acquises et chiffrer les données vérifiant un critère de qualité,
Emettre un message en fonction de la conformité des donnés,
Un protocole de communication configuré dans le middleware,
Un réseau de communication.

L'équipement d'acquisition des données est, par exemple, un capteur d'empreintes, une caméra et/ou un dispositif d'acquisition audio.

La liaison reliant un équipement à l'ordinateur est, par exemple, une liaison physique de type USB (Universal Serial Bus).

L'invention concerne aussi un procédé pour acquérir une ou plusieurs données biométriques d'un individu caractérisé en ce qu'il comporte au moins les étapes suivantes :

L'individu accède à une page web à partir d'un navigateur et à un ou plusieurs services biométriques,

Un middleware équipant un ordinateur recense un ou plusieurs équipements périphériques d'acquisition de données biométriques,

L'individu active une commande de démarrage du ou des équipements d'acquisition de données biométriques, via l'interface utilisateur Web,

Suite à cette activation le middleware vérifie les autorisations d'accès aux équipements périphériques d'acquisition de données biométriques, leurs disponibilités pour acquérir une ou plusieurs données biométriques et alloue au moins un équipement d'acquisition de données biométriques disponible,

Le middleware transmet des informations de guidage pour l'individu sur la page web afin que l'individu procède à l'enregistrement de ces données biométriques sur le ou les équipements périphériques alloués,

Le middleware procède à l'acquisition des données biométriques depuis le ou les équipements périphériques activés et contrôle la qualité des données biométriques acquises,

Les données biométriques vérifiant la qualité requise sont chiffrées par une clé publique mémorisée dans le middleware, avant d'être transmises à un serveur central.

Le procédé va acquérir une ou plusieurs des données biométriques suivantes : des empreintes, des images vidéos, des sons audio caractérisant la voix.

Le système et le procédé selon l'invention peuvent être utilisés dans un environnement, un système de contrôle d'accès.

D'autres caractéristiques et avantages de l'invention apparaîtront mieux à la lecture de la description d'exemples de réalisation donnés à titre illustratif et nullement limitatif annexée des figures représentant :
[Fig.1] un exemple de système d'enrôlement selon l'invention,
[Fig.2] un exemple d'enchaînement des étapes du procédé d'enrôlement selon l'invention.

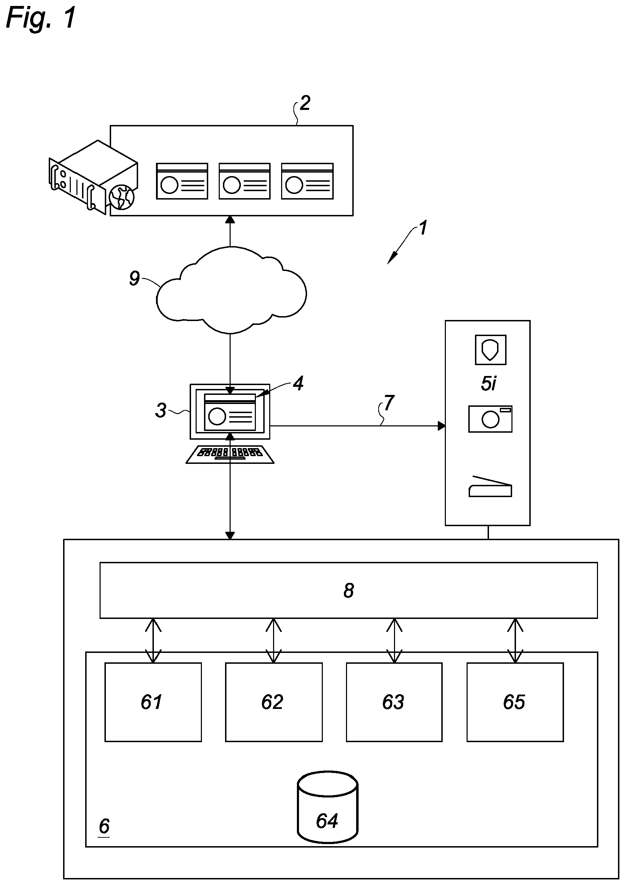

La figure 1 illustre un exemple de système d'enrôlement web 1 selon l'invention composé d'un serveur central 2 hébergeant plusieurs pages web, d'un ordinateur personnel 3 ou PC avec un navigateur 4, d'un ou de plusieurs équipements 5i configurés pour acquérir des données biométriques d'un individu et d'un middleware 6 installé sur le PC. Le ou les équipements d'acquisition des données biométriques sont connectés à l'ordinateur, via des connexions physiques 7 de type USB (bus universel en série) ou tout autre type de liaison.

Un protocole réseau de type websocket 8 est configuré au-dessus du middleware 6 afin d'assurer une interface pour le navigateur et créer des canaux de communication entre le navigateur web et les services du middleware.

L'ordinateur 3 sur lequel est installé le middleware communique avec un site web par une liaison, tel qu'un réseau étendu 9 désigné sous l'abréviation anglo-saxonne WAN (Wide Area Network).

Le ou les équipements permettant d'acquérir une donnée biométrique sont par exemple une caméra, un dispositif d'acquisition d'empreintes digitales, un scanner, un dispositif permettant d'enregistrer des sons audio telle que la voix ou tout autre dispositif adapté et connu de l'homme du métier.

Le middleware 6 installé sur le PC comprend par exemple un module d'analyse des données biométriques 61, un module d'exploitation des données 62, un module de chiffrement des données biométriques 63, une mémoire vive 64, un module de communication avec les périphériques 65 composé d'une interface standardisée et d'une implémentation propre à chaque type de périphérique. Un service sera sélectionné par le middleware et mis en œuvre en fonction de l'utilisation recherchée. Le middleware comprend dans sa mémoire une clé publique de chiffrement utilisée pour chiffrer les données biométriques qui vérifient un critère de qualité prédéfini.

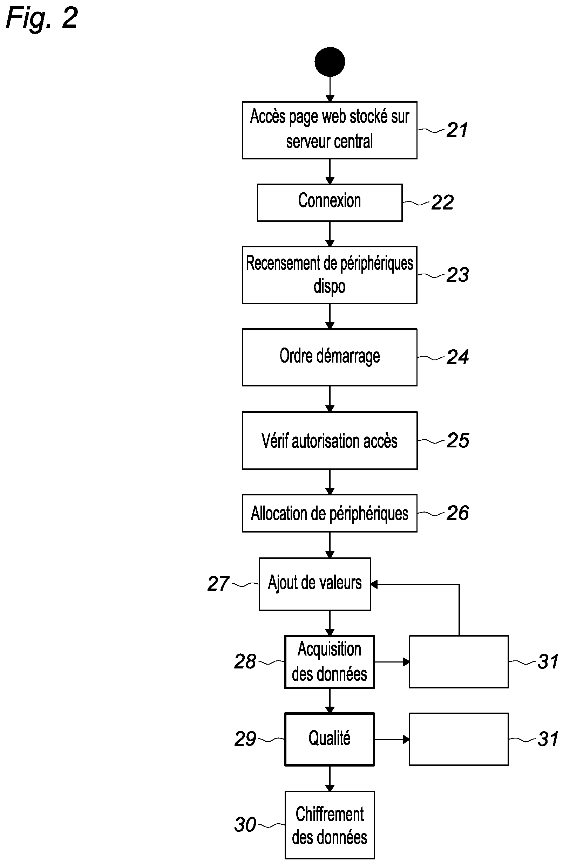

La figure 2 illustre les étapes exécutées pour l'acquisition de données biométriques d'un individu. Le procédé va exécuter les étapes suivantes :
21 - L'individu accède à une page web stockée sur le serveur central depuis le navigateur installé sur l'ordinateur,
22 - La connexion à un service biométrique hébergé par le middleware local est établie, cette connexion est automatique et permet l'acquisition des données, leur analyse, etc.,
23 - Le middleware recense le ou les périphériques disponibles et connus de la configuration du middleware,
24 - L'individu active une commande de démarrage du ou des périphériques recensés correspondant aux équipements d'acquisition de données biométriques, via un bouton commande présent sur l'interface utilisateur Web,
25 - Le middleware va alors vérifier les autorisations d'accès aux périphériques, notamment si le périphérique est libre, i.e. non utilisé par un autre processus, occupé, i.e. en cours d'acquisition, en état de fonctionnement, i.e. branché ou en panne. Ces vérifications sont réalisées en utilisant les services de recensement de périphérique fournis par le système d'exploitation ou par des tests fournis par les kits de développement logiciels connus sous l'abréviation SDK (Software Development Kit) des capteurs mis à disposition par les fournisseurs d'accès,
26 - Le middleware va ensuite allouer un équipement d'acquisition de données biométriques au processus déclenché par la commande, et
27 - Manipuler les données biométriques de l'utilisateur (exemple : images, flux audio) issues du périphérique,
28 - Le middleware procède alors à l'acquisition des données biométriques depuis l'équipement d'acquisition de données biométriques activé,
29 - Le middleware va ensuite contrôler la qualité des données biométriques acquises en temps réel et traiter les données (modélisation, compression, ...) en utilisant un logiciel connu de l'homme du métier ; le critère de qualité est choisi selon la donnée biométrique acquise, des images du visage, des empreintes digitales, la reconnaissance vocale,
30 - La ou les données biométriques retenues, car vérifiant le critère de qualité requis, sont par exemple chiffrées par une clé publique stockée dans le middleware avant d'être transmises au serveur central ; si les données biométriques acquises ne vérifient pas le critère de qualité requis, le middleware peut émettre un message de non-conformité des données et un message demandant à l'individu de procéder à une nouvelle acquisition,
31 - Le middleware transmet, au fur et à mesure, sur la page web des informations de guidage pour l'individu afin que le système puisse acquérir des données biométriques souhaitées.

La donnée biométrique est, par exemple, une empreinte, un template de l'iris, ou toute autre donnée biométrique.

Durant les étapes explicités ci-dessus, les échanges entre la page Web, l'interface homme machine IHM et le middleware sont diffusés par cette dernière via une liaison sécurisée de type web socket.

Le système et le procédé selon l'invention permettent de faciliter et de sécuriser l'acquisition de données biométriques indépendamment du type et du fabricant du périphérique d'acquisition.

## Revendications

1. Système (1) pour acquérir des données biométriques propres à un individu comportant :
- un serveur (2) hébergeant une ou plusieurs pages web,
- un ordinateur (3) comportant :
∘ un navigateur (4) permettant d'accéder auxdites pages web via un réseau (9) de communication,
∘ une mémoire vive (64),
- un ou plusieurs équipements périphériques (5i) configurés pour acquérir une ou plusieurs données biométriques et connectés (7) à l'ordinateur (3),
- un middleware (6) installé sur ledit ordinateur, ledit middleware comprenant un module d'analyse des données biométriques (61), un module d'exploitation des données (62), un module de chiffrement des données biométriques (63), un module de communication (65) avec le ou plusieurs équipements périphériques (5i) composé d'une interface standardisée et d'une implémentation propre à chaque type de périphérique ;
ledit middleware (6) étant configuré pour :
- procéder (28) à une acquisition de données biométriques de l'individu par l'un des un ou plusieurs équipements périphériques (5i) ;
- élaborer des informations de guidage de l'individu durant ladite acquisition et provoquer la transmission (31) desdites informations de guidage sur la page web préalablement sélectionnée (21) par l'individu ;
- contrôler (29) en temps réel les données biométriques acquises au regard d'un critère de qualité prédéfini choisi selon la donnée biométrique acquise ;
- élaborer un message de non-conformité si lesdites données biométriques acquises ne satisfont pas audit critère de qualité prédéfini à destination de l'individu et provoquer une transmission (30) sur la page web sélectionnée dudit message de non-conformité pour inviter l'individu à procéder à une nouvelle acquisition de données biométriques ;
- chiffrer (30) les données biométriques satisfaisant le critère de qualité prédéfini à l'aide d'une clé de chiffrement mémorisée dans la mémoire vive (64) et transmettre lesdites données chiffrées au serveur (2).

2. Système selon la revendication 1 **caractérisé en ce qu'**un des un ou plusieurs équipements périphériques (5i) configurés pour acquérir une ou plusieurs données biométriques est un capteur d'empreintes.

3. Système selon la revendication 1 **caractérisé en ce qu'**un des un ou plusieurs équipements périphériques (5i) configurés pour acquérir une ou plusieurs données biométriques est une caméra.

4. Système selon la revendication 1 **caractérisé en ce qu'**un des un ou plusieurs équipements périphériques (5i) configurés pour acquérir une ou plusieurs données biométriques est un dispositif d'acquisition de données audio.

5. Système selon l'une des revendications 1 à 4 **caractérisé en ce que** le ou les plusieurs équipements périphériques (5i) configurés pour acquérir une ou plusieurs données biométriques sont connectés à l'ordinateur (3) par une liaison physique de type USB.

6. Procédé pour acquérir une ou plusieurs données biométriques d'un individu **caractérisé en ce qu'**il comporte au moins les étapes suivantes :
- sélection (21) par l'individu d'une page web parmi une ou plusieurs pages web hébergées par un serveur (2) à partir d'un navigateur (4) d'un ordinateur (3) et à un ou plusieurs services biométriques,
- recensement (23) d'un ou plusieurs équipements périphériques (5i) d'acquisition de données biométriques disponibles parmi ceux connectés audit ordinateur (3) par un middleware (6) dudit ordinateur (3) par le biais d'une interface standardisée et d'une implémentation propre à chaque type de périphérique ;
- activation par l'individu d'une commande de démarrage du ou des équipements périphériques (5i) d'acquisition de données biométriques disponibles,
- allocation (25) d'au moins un équipement périphérique (5i) d'acquisition de données biométriques disponible,
- élaboration et transmission (31) par ledit middleware (6) d'informations de guidage de l'individu sur la page web sélectionnée afin que l'individu procède à l'enregistrement de ses données biométriques sur le au moins un équipement périphérique (5i) alloué,
- mise en œuvre par le middleware (6) d'une acquisition (28) de données biométriques par le au moins un équipement périphérique (5i) d'acquisition de données biométriques alloué et contrôle en temps réel des données biométriques acquises (29) au regard d'un critère de qualité prédéfini, choisi selon la donnée biométrique acquise ;
- élaboration par le middleware (6) d'un message de non-conformité si lesdites données biométriques acquises ne satisfont pas audit critère de qualité prédéfini à destination de l'individu et transmission (30) sur la page web sélectionnée dudit message de non-conformité pour inviter l'individu à procéder à une nouvelle acquisition de données biométriques ;
- chiffrement (30) par le middleware (6) des données biométriques satisfaisant le critère de qualité prédéfini à l'aide d'une clé de chiffrement mémorisée dans la mémoire vive (64) de l'ordinateur (3) et transmission desdites données chiffrées au serveur (2).

7. Procédé selon la revendication 6 **caractérisé en ce que** l'acquisition (28) de données biométriques consiste en une acquisition de plusieurs empreintes.

8. Procédé selon la revendication 6 **caractérisé en ce que** l'acquisition (28) de données biométriques consiste en une acquisition de plusieurs images vidéo.

9. Procédé selon la revendication 6 **caractérisé en ce que** l'acquisition (28) de données biométriques consiste en une acquisition de sons audio.

10. Procédé selon l'une des revendications 6 à 9 lorsque que le serveur (2) hébergeant une ou plusieurs pages web, l'ordinateur (3) comportant un navigateur (4) permettant d'accéder auxdites pages web via un réseau (9) de communication, le ou plusieurs équipements périphériques (5i) configurés pour acquérir une ou plusieurs données biométriques sont ceux d'un système de contrôle d'accès tel que défini par la revendication 1.

## Patentansprüche

1. **System** (1) zur Erfassung personenspezifischer biometrischer Daten, umfassend:
- einen Server (2), der eine oder mehrere Webseiten hostet,
- einen Computer (3), umfassend:
∘ einen Browser (4), der den Zugriff auf diese Webseiten über ein Kommunikationsnetzwerk (9) ermöglicht,
∘ einen Arbeitsspeicher (64),
- ein oder mehrere Peripheriegeräte (5i), die dazu konfiguriert sind, ein oder mehrere biometrische Datenelemente zu erfassen, und die mit dem Computer (3) verbunden (7) sind,
- eine Middleware (6), die auf diesem Computer installiert ist, wobei diese Middleware ein Modul zur Analyse der biometrischen Daten (61), ein Modul zur Verwertung der Daten (62), ein Modul zur Verschlüsselung der biometrischen Daten (63), ein Modul zur Kommunikation (65) mit dem einen oder den mehreren Peripheriegeräten (5i) umfasst, das sich aus einer standardisierten Schnittstelle und einer für jeden Peripherietyp spezifischen Implementierung zusammensetzt;
wobei diese Middleware (6) konfiguriert ist zum:
- Durchführen (28) einer Erfassung biometrischer Daten der Person durch eines des einen oder der mehreren Peripheriegeräte (5i);
- Erstellen von Informationen zur Anleitung der Person während dieser Erfassung und Veranlassen der Übertragung (31) dieser Informationen zur Anleitung auf die von der Person vorab ausgewählte (21) Webseite;
- Überwachen (29) der erfassten biometrischen Daten in Echtzeit in Bezug auf ein vordefiniertes Qualitätskriterium, das entsprechend der erfassten biometrischen Daten ausgewählt wird;
- Erstellen einer Fehlermeldung, wenn diese erfassten biometrischen Daten das vordefinierte für die Person bestimmte Qualitätskriterium nicht erfüllen, und Veranlassen einer Übertragung (30) der Fehlermeldung auf die ausgewählte Webseite, um die Person zur Durchführung einer erneuten Erfassung biometrischer Daten aufzufordern;
- Verschlüsseln (30) der biometrischen Daten, die das vordefinierte Qualitätskriterium erfüllen, mittels eines in dem Arbeitsspeicher (64) gespeicherten Verschlüsselungsschlüssels und Übertragen dieser verschlüsselten Daten an den Server (2).

2. System nach Anspruch 1, **dadurch gekennzeichnet, dass** eines des einen oder der mehreren Peripheriegeräte (5i), die zur Erfassung eines oder mehrerer biometrischer Datenelemente konfiguriert sind, ein Fingerabdrucksensor ist.

3. System nach Anspruch 1, **dadurch gekennzeichnet, dass** eines des einen oder der mehreren Peripheriegeräte (5i), die zur Erfassung eines oder mehrerer biometrischer Datenelemente konfiguriert sind, eine Kamera ist.

4. System nach Anspruch 1, **dadurch gekennzeichnet, dass** eines des einen oder der mehreren Peripheriegeräte (5i), die zur Erfassung eines oder mehrerer biometrischer Datenelemente konfiguriert sind, eine Vorrichtung zur Erfassung von Audiodaten ist.

5. System nach einem der Ansprüche 1 bis 4,
**dadurch gekennzeichnet, dass** das eine oder die mehreren Peripheriegeräte (5i), die zur Erfassung eines oder mehrerer biometrischer Datenelemente konfiguriert sind, mit dem Computer (3) über eine physische Verbindung vom USB-Typ verbunden sind.

6. Verfahren zum Erfassen eines oder mehrerer biometrischer Datenelemente einer Person, **dadurch gekennzeichnet, dass** es mindestens die folgenden Schritte umfasst:
- Auswahl (21) einer Webseite, durch die Person, aus einer oder mehreren Webseiten, die von einem Server (2) gehostet werden, ausgehend von einem Browser (4) eines Computers (3) und einer oder mehreren biometrischen Diensten,
- Inventarisierung (23) eines oder mehrerer Peripheriegeräte (5i) zur Erfassung biometrischer Daten, die unter denjenigen verfügbar sind, die mit diesem Computer (3) verbunden sind, durch eine Middleware (6) dieses Computers (3), über eine standardisierte Schnittstelle und eine für jeden Peripherietyp spezifische Implementierung;
- Aktivierung eines Startbefehls für das oder die verfügbare(n) Peripheriegerät(e) (5i) zur Erfassung biometrischer Daten, durch die Person,
- Zuordnung (25) von mindestens einem verfügbaren Peripheriegerät (5i) zur Erfassung biometrischer Daten,
- Erstellung und Übertragung (31) von Informationen zur Anleitung der Person auf die ausgewählte Webseite, durch diese Middleware (6), damit die Person die Aufzeichnung ihrer biometrischen Daten auf dem mindestens einen zugeordneten Peripheriegerät (5i) durchführt,
- Durchführung, durch die Middleware (6), einer Erfassung (28) von biometrischen Daten durch das mindestens eine zugeordnete Peripheriegerät (5i) zur Erfassung von biometrischen Daten und Echtzeitkontrolle der erfassten biometrischen Daten (29) in Bezug auf ein vordefiniertes Qualitätskriterium, das entsprechend den erfassten biometrischen Daten ausgewählt wird;
- Erstellung einer Fehlermeldung durch die Middleware (6), wenn diese erfassten biometrischen Daten das vordefinierte für die Person bestimmte Qualitätskriterium nicht erfüllen, und Übertragung (30) der Fehlermeldung auf die ausgewählte Webseite, um die Person zur Durchführung einer erneuten Erfassung biometrischer Daten aufzufordern;
- Verschlüsselung (30) der biometrischen Daten, die das vordefinierte Qualitätskriterium erfüllen, durch die Middleware (6) mittels eines in dem Arbeitsspeicher (64) des Computers (3) gespeicherten Verschlüsselungsschlüssels und Übertragung dieser verschlüsselten Daten an den Server (2).

7. Verfahren nach Anspruch 6, **dadurch gekennzeichnet, dass** die Erfassung (28) biometrischer Daten aus einer Erfassung mehrerer Fingerabdrücke besteht.

8. Verfahren nach Anspruch 6, **dadurch gekennzeichnet, dass** die Erfassung (28) biometrischer Daten aus einer Erfassung mehrerer Videobilder besteht.

9. Verfahren nach Anspruch 6, **dadurch gekennzeichnet, dass** die Erfassung (28) biometrischer Daten aus einer Erfassung von Audiotönen besteht.

10. Verfahren nach einem der Ansprüche 6 bis 9, wenn der Server (2) eine oder mehrere Webseiten hostet, wobei der Computer (3) einen Browser (4) aufweist, der den Zugriff auf diese Webseiten über ein Kommunikationsnetzwerk (9) ermöglicht, wobei das eine oder die mehreren Peripheriegeräte (5i), die zur Erfassung eines oder mehrerer biometrischer Datenelemente konfiguriert sind, diejenigen eines Zugangskontrollsystems sind, wie durch Anspruch 1 definiert.

## Claims

1. **System** (1) for acquiring biometric data specific to an individual, comprising:
- a server (2) hosting one or more web pages,
- a computer (3) comprising:
∘ a browser (4) for accessing said web pages via a communication network (9),
∘ a random access memory (64),
- one or more peripheral devices (5i) which are configured to acquire one or more items of biometric data and which are connected (7) to the computer (3),
- middleware (6) installed on said computer, said middleware comprising a biometric data analysis module (61), a data processing module (62), a biometric data encryption module (63), a module (65) for communicating with one or more peripheral devices (5i) comprising a standardized interface and an implementation specific to each type of peripheral;
said middleware (6) being configured to:
- proceed (28) to acquire the individual's biometric data using one or more peripheral devices (5i);
- generate information for guiding the individual during said acquisition and cause said guiding information to be transmitted (31) to the web page previously selected (21) by the individual;
- check (29) the acquired biometric data in real time against a predefined quality criterion selected according to the acquired biometric data;
- generate a non-conformity message for the individual if said acquired biometrics do not meet said predefined quality criterion, and cause said non-conformity message to be transmitted (30) to the selected web page to invite the individual to proceed with a new acquisition of biometric data;
- encrypt (30) the biometric data meeting the predefined quality criterion using an encryption key stored in the random access memory (64) and transmit said encrypted data to the server (2).

2. System according to claim 1, **characterized in that** one of the one or more peripheral devices (5i) configured to acquire one or more items of biometric data is a fingerprint sensor.

3. System according to claim 1, **characterized in that** one of the one or more peripheral devices (5i) configured to acquire one or more items of biometric data is a camera.

4. System according to claim 1, **characterized in that** one of the one or more peripheral devices (5i) configured to acquire one or more items of biometric data is an audio data acquisition device.

5. System according to one of claims 1 to 4, **characterized in that** the one or more peripheral devices (5i) configured to acquire one or more items of biometric data are connected to the computer (3) by a physical link of the USB type.

6. Method for acquiring one or more items of biometric data from an individual, **characterized in that** it comprises at least the following steps:
- selection (21) by the individual of a web page from among one or more web pages hosted by a server (2) from a browser (4) of a computer (3) and to one or more biometric services,
- identification (23) of one or more available peripheral devices (5i) for acquiring biometric data from among those connected to said computer (3) by a middleware (6) of said computer (3) via a standardized interface and an implementation specific to each type of peripheral;
- activation by the individual of a start command for the available peripheral device(s) (5i) for acquiring biometric data,
- allocation (25) of at least one available peripheral device (5i) for acquiring biometric data,
- generation and transmission (31) by said middleware (6) of information for guiding the individual to the selected web page, so that the individual proceeds to register their biometric data on the at least one allocated peripheral device (5i),
- implementation by the middleware (6) of an acquisition (28) of biometric data by the at least one allocated peripheral device (5i) for acquiring biometric data and real-time checking of the acquired biometric data (29) against a predefined quality criterion selected according to the acquired biometric data;
- generation by the middleware (6) of a non-conformity message for the individual if said acquired biometric data does not meet said predefined quality criterion, and transmission (30) of said non-conformity message to the selected web page to invite the individual to proceed with a new acquisition of biometric data;
- encryption (30) by the middleware (6) of the biometric data meeting the predefined quality criterion using an encryption key stored in the random access memory (64) of the computer (3) and transmission of said encrypted data to the server (2).

7. Method according to claim 6, **characterized in that** the acquisition (28) of biometric data consists in acquiring multiple fingerprints.

8. Method according to claim 6, **characterized in that** the acquisition (28) of biometric data consists in acquiring multiple video images.

9. Method according to claim 6, **characterized in that** the acquisition (28) of biometric data consists in acquiring audio sounds.

10. Method according to one of claims 6 to 9 when the server (2) hosting one or more web pages, the computer (3) comprising a browser (4) for accessing said web pages via a communication network (9), the one or more peripheral devices (5i) configured to acquire one or more items of biometric data are those of an access control system as defined by claim 1.
